**Europäisches Patentamt**

**European Patent Office**

**Office européen des brevets**

(11) Veröffentlichungsnummer: **0 023 679**
**A1**

# (12) EUROPÄISCHE PATENTANMELDUNG

(21) Anmeldenummer: **80104378.7**

(22) Anmeldetag: **24.07.80**

(51) Int. Cl.³: **B 01 D 53/02**

(30) Priorität: **28.07.79 DE 2930782**

(43) Veröffentlichungstag der Anmeldung: **11.02.81**
**Patentblatt 81/6**

(84) Benannte Vertragsstaaten: **BE DE FR GB IT NL SE**

(71) Anmelder: **Linde Aktiengesellschaft,**
**Abraham-Lincoln-Strasse 21, D-6200 Wiesbaden (DE)**

(72) Erfinder: **Benkmann, Christian, Meisenstrasse 39,**
**D-8032 Gräfelfing (DE)**

(74) Vertreter: **Schaefer, Gerhard, Dr., Linde**
**Aktiengesellschaft Zentrale Patentabteilung,**
**D-8023 Höllriegelskreuth (DE)**

(54) **Verfahren zur adsorptiven Reinigung oder Zerlegung von Gasgemischen.**

(57) Dieses Verfahren zur adsorptiven Reinigung oder Zerlegung von Gasgemischen wird unter Verwendung mehrerer zyklisch umschaltbarer Adsorber (1–4) betrieben. Diese durchlaufen mit zeitzeitlicher Versetzung jeweils gleiche Schaltzyklen, die Adsorptions-, Entspannungs-, Spül- sowie Druckaufbauphasen enthalten. Dabei fallen während mindestens einer Entspannungsphase sowie während der Spülphase Gasfraktionen an, die mit zunächst adsorbierten Gaskomponenten angereichert sind und insgesamt als Restgas (7) abgezogen werden. Der Volumen- oder Massenstrom dieses Restgases wird dadurch konstant gehalten, daß die Volumen- oder Massenströme der während der Entspannungsphasen anfallenden Restgasanteile sowie der während der Spülphasen zugeführten Spülgase entsprechend geregelt werden (25, 23, 18). Als Spülgas können ebenfalls Entspannungsgase verwendet werden.

0023679

## Verfahren zur adsorptiven Reinigung
## oder Zerlegung von Gasgemischen

Die Erfindung betrifft ein Verfahren zur adsorptiven Reinigung oder Zerlegung von Gasgemischen unter Verwendung mehrerer zyklisch umschaltbarer Adsorber gemäß dem Oberbegriff des Patentanspruchs 1.

Ein derartiges Verfahren ist beispielsweise aus der DE-OS 1 919 557 bekannt. Dort ist (Figuren 4 und 5) ein mit vier zyklisch umschaltbaren Adsorbern arbeitendes Verfahren dargestellt und beschrieben, bei dem im Druckwechselbetrieb auf die Adsorptionsphase drei Entspannungsphasen, eine Spülphase sowie zwei Druckaufbauphasen folgen. Die erste Entspannungsphase findet im Druckausgleich mit der ersten Druckaufbauphase eines anderen Adsorbers statt, die während der zweiten, im Gleichstrom betriebenen Entspannungsphase abströmende Gasfraktion dient zum Spülen eines weiteren Adsorbers, und die während der dritten und letzten, im Gegenstrom betriebenen Entspannungsphase anfallende Gasfraktion wird direkt als Restgas abgezogen. Die im Zuge der auf dem niedrigsten Druck betriebenen Spülphase anfallende Gasfraktion wird ebenfalls als Restgas abgegeben. Es strömt somit kontinuier-

Form. 5729 7.78

0023679

lich Restgas ab, und zwar wechselweise aus der Gegenstrom-Entspannungsphase und der Spülphase. Die erste Druckaufbauphase wird sowohl im Druckausgleich mit der ersten Entspannungsphase eines anderen Adsorbers als auch durch Einleiten von gereinigtem Produktgas ausgeführt. Die zweite Druckaufbauphase erfolgt ausschließlich mit gereinigtem Produktgas.

Bei diesem bekannten Verfahren sind umfangreiche Regelmaßnahmen vorgesehen, um einen konstanten Produktgasstrom zu erhalten. Die Maßnahmen sind erforderlich, da ständig während der Adsorptionsphase gereinigtes Produktgas zum Druckaufbau abgezweigt wird, und zwar in periodisch schwankenden Mengen. Eine ähnliche Regelung für den Restgasstrom ist jedoch nicht vorgesehen. Dies kann dann von erheblichem Nachteil sein, wenn die adsorbierten Komponenten, die vom Restgas mitgeführt werden, in irgendeiner Weise genutzt werden sollen und es dabei auf eine möglichst konstante Zulieferung ankommt. Der Anfall des Restgases erfolgt beim bekannten Verfahren jedoch unter starken periodischen Schwankungen. Der Volumen- bzw. Massenstrom sinkt während der Gegenstrom-Entspannungsphase stark ab, um dann zu Beginn der Spülphase wiederum stark anzusteigen und erst gegen Ende der Spülphase hin erneut abzufallen. Sollen derartige Schwankungen ausgeglichen werden, so ist der Einsatz von Pufferbehältern erforderlich, die erhebliche Ausmaße annehmen können und entsprechende Investitionskosten verursachen.

Das Problem des Ausgleichs der im Restgas auftretenden Schwankungen stellt sich auch bei Druckwechsel-Adsorptionsverfahren, die mit mehr als vier Adsorbern und mehr als drei Entspannungsphasen arbeiten. So ist beispielsweise auch beim Verfahren der DE-OS 26 24 346 ein Pufferbehälter für das abströmende Restgas vorgesehen. Dieser wird auch hier noch benötigt, obwohl mit einer Vergrößerung der Adsorberanzahl und der damit im Zusammenhang stehenden Vermehrung der Entspannungsphasen sowie der Druckaufbauphasen im allgemeinen bereits eine Glättung der Schwankungen, die in den anfallenden Gasströmen auftreten, verbunden ist. Bei dem mit neun Adsorbern arbeitenden Verfahren der DE-OS 26 24 346 folgen auf die Adsorptionsphase zunächst eine erste und zweite Entspannungsphase, die jeweils im Druckausgleich mit entsprechenden Druckaufbauphasen anderer Adsorber betrieben werden, eine dritte Entspannungsphase, die Spülgas für einen anderen Adsorber liefert, eine vierte Entspannungsphase, die im Druckausgleich mit der ersten Druckaufbaustufe des gerade gespülten Adsorbers betrieben wird, eine fünfte Entspannungsphase, die eine direkt in die Restgasleitung abgegebene Gasfraktion liefert, eine Spülphase unter Verwendung der während der dritten Entspannungsphase eines anderen Adsorbers anfallenden Gasfraktion als Spülgas, sowie vier Druckaufbauphasen, deren drei erste im Druckausgleich mit entsprechenden Entspannungsphasen anderer Adsorber betrieben werden und für deren letzte gereinigtes Produktgas benötigt wird. Auch bei dieser Verfahrensweise treten im Restgas vor dem Pufferbehälter starke Schwankungen auf, da das Restgas nacheinander aus jeweils verschiedenen Anteilen besteht, die zeitweise zugleich aus der fünften Entspannungsphase und der Spülphase zweier Adsorber, zeitweise zugleich aus den Spülphasen derselben beiden Adsorber und zeitweise lediglich aus der Spülphase eines Adsorbers stammen.

Bereits in der DE-OS 26 24 346 sind in den Ausführungsbeispielen adsorptiv zu behandelnde Gasgemische genannt, die wertvolle Bestandteile enthaltende Restgase liefern. So handelt es sich einmal um die Reinigung von Rohwasserstoff, wobei als Restgas ein Gasgemisch anfällt, das noch

0023679

einen beträchtlichen Heizwert besitzt. Soll ein derartiges Gas einer Verbrennung zugeführt werden, so wird es im allgemeinen erforderlich sein, Zulieferungsschwankungen zu vermeiden. Zum anderen geht es dort um die Zerlegung von Erdgas, wobei das anfallende Restgas außer einem beträchtlichen Anteil an Methan noch weitere leichte Kohlenwasserstoffe enthält, deren getrennte Gewinnung zu chemischen Zwecken unter Umständen erwünscht sein kann. Auch hier wäre im allgemeinen ein zeitlich konstanter Restgasanfall anzustreben.

Der Erfindung liegt die Aufgabe zugrunde, ein Verfahren der eingangs genannten Art bereitzustellen, das es erlaubt, Restgasschwankungen auf möglichst wirtschaftliche Weise auszugleichen.

Diese Aufgabe wird gemäß der Erfindung dadurch gelöst, daß durch Regelung der Volumen- oder Massenströme der während der Entspannungsphasen anfallenden, als Restgas abgezogenen Gasfraktionen sowie der während der Spülphasen zugeführten Spülgase als Restgas ein zeitlich im wesentlichen konstanter Volumen- bzw. Massenstrom abgezogen wird.

Das Wesen der Erfindung besteht demnach darin, einen Ausgleich im Restgasanfall nicht erst im Anschluß an das eigentliche Adsorptionsverfahren, etwa durch Einsatz von Pufferbehältern, herbeizuführen, sondern diesen Ausgleich bereits im Zuge des Adsorptionsverfahrens selbst durch geeignete Regelmaßnahmen vorzunehmen. Die regelnden Eingriffe werden dabei an unterschiedlichen Stellen im Verfahren vorgenommen. So wird einerseits die als Restgas abströmende, aus der entsprechenden Entspannungsphase stammende Gasfraktion direkt nach Verlassen des entsprechenden Adsorbers reguliert, während der aus der Spülphase stammende Restgasanteil wiederum indirekt durch Regulierung des in

0023679

den zu spülenden Adsorber einströmenden Spülgases beeinflußt wird. Der regelnde Eingriff erfolgt im Falle des abströmenden Entspannungsgases somit strömungsmäßig hinter dem Adsorber, im Falle des abströmenden, desorbierte Komponenten mitführenden Spülgases jedoch strömungsmäßig bereits vor dem betreffenden Adsorber.

Die Vorteile der erfindungsgemäßen Maßnahmen liegen vor allem darin, daß der Pufferbehälter ganz entfällt oder zumindest, falls etwa noch vorhandene Konzentrationsschwankungen auszugleichen sind, erheblich verkleinert werden kann, womit auch eine nicht unbeträchtliche Raumersparnis verbunden ist. Da die Restgase nämlich im allgemeinen auf einem relativ niedrigen Druckniveau anfallen, müssen die Pufferbehälter entweder ein entsprechendes Volumen aufweisen oder die Restgase durch zusätzliche Kompressoren verdichtet werden. Die erfindungsgemäße Maßnahme ist überdies auf einfache Weise mit Hilfe herkömmlicher Apparaturen ausführbar.

Die Erfindung eignet sich vorwiegend zur Anwendung im Rahmen reiner Druckwechsel-Adsorptionsverfahren. Von einem solchen, annähernd adiabatisch verlaufenden reinen Druckwechselbetrieb kann allerdings auch abgewichen werden, und zwar etwa dahingehend, daß ein geheiztes Spülgas verwendet wird.

Die Anzahl der Adsorber ist bei der Anwendung des Verfahrens nur in soweit von Bedeutung, als die Existenz mindestens einer Restgas liefernden Entspannungsphase sowie einer Spülphase gewährleistet sein muß. Dies erfordert je nach der Verfahrensführung eine gewisse Mindestanzahl an Adsorbern. Diese Mindestanzahl beträgt drei, falls neben der Restgas liefernden Entspannungsphase noch mindestens eine im Druckausgleich zu betreibende Entspannungsphase

Form. 5729 7.78

vorgesehen ist. Eine besonders wirtschaftliche Verfahrensweise besteht jedoch darin, daß als Spülgas jeweils während einer oder mehrerer Entspannungsphasen abströmende Gasfraktionen verwendet werden, was eine Mindestanzahl von vier Adsorbern erforderlich macht, falls wenigstens ein Druckausgleich vorgesehen ist.

Bei der einfachsten Verfahrensführung unter Anwendung vergleichsweise weniger Adsorber wird demnach so vorgegangen, daß Restgas jeweils nur aus einem einzigen Adsorber abgezogen wird und das Restgas insgesamt aus nacheinander anfallenden, abwechselnd aus Entspannungs- und Spülphasen stammenden Gasfraktionen besteht, wobei die Volumen- bzw. Massenströme dieser Gasfraktionen zeitlich im wesentlichen konstant gehalten werden. Je mehr Adsorber jedoch verwendet werden, desto eher kann es vorkommen, daß zumindest während eines Teilabschnittes eines jeden Schaltzyklus Restgas aus mindestens zwei Adsorbern gleichzeitig abgezogen wird. Dann soll so vorgegangen werden, daß die Summe der Volumen- bzw. Massenströme der gleichzeitig anfallenden, als Restgasanteile abgezogenen Gasfraktionen dauernd auf einem zeitlich im wesentlichen konstanten Wert gehalten wird. Diese Verfahrensweise erfordert zwar einen vermehrten Regelaufwand, ist aber insoweit wirtschaftlicher, als bei vermehrter Adsorberanzahl die Entspannungsgase besser ausgenutzt werden können und gereinigtes Produktgas schließlich nur mehr in der letzten Druckaufbaustufe benötigt wird, falls diese nicht bereits mit Rohgas beschickt wird.

Zur korrekten Durchführung der erfindungsgemäßen Maßnahme ist es erforderlich, die Schaltzyklen zeitlich auf eine bestimmte Weise einzuteilen, und zwar so, daß die Längen der Restgas  bzw. Restgasanteile liefernden Spül- und Entspannungsphasen in demselben Verhältnis zueinander stehen wie die während der entsprechenden Phasen anfallenden Gesamtvolumina bzw. -massen der Gasfraktionen. Dies ergibt sich unmittelbar aus der geforderten Konstanz der Volumen- bzw. Massenströme des Restgases. Der Unterschied zwischen Volumen- und Massenströmen besteht darin, daß beim Volumenstrom die Dichte des Gases bzw. Gasgemisches unberücksichtigt bleibt, die andererseits in den Massenstrom eingeht. Bei gleichbleibender Zusammensetzung und gleichbleibendem Gesamtdruck eines Gasstromes besteht zwischen dem Volumenstrom und dem Massenstrom stets Proportionalität. Ändert sich jedoch beispielsweise die Zusammensetzung im Laufe der Zeit, so tritt trotz gleichbleibenden Volumenstroms eine entsprechende Änderung des Massenstromes auf.

Die Regelung der Volumen- bzw. Massenströme kann auf einfache Weise mittels regelbarer Ventile erfolgen. Im allgemeinen wird es erforderlich sein, die Durchlaßquerschnitte dieser Ventile während der einzelnen Regelabschnitte mit der Zeit zu vergrößern. Dies gilt vor allem für die Restgas liefernden Entspannungsphasen, da bei diesen der Druck mit fortschreitender Zeit absinkt. Um den Volumenstrom konstant zu halten, muß der Durchlaßquerschnitt des entsprechenden Regelventiles somit ständig vergrößert werden. Dies muß nicht immer in gleicher Weise für den Massenstrom gelten, da es vorkommen kann, daß das Desorbat aus vergleichsweise sehr schweren Molekülen besteht und der Druckabfall so wenigstens zeitweise kompensiert wird. Bei der Spülphase ist die Verfahrensweise mehr vom Einzelfall abhängig, da der Regeleingriff hier zwar dem zuzuführenden Spülgasstrom gilt, der im allgemeinen ebenfalls aus einer Entspannungsphase stammt, daneben aber das Desorptionsverhalten der Desorbatfraktion während der Spülphase eine entscheidende Rolle spielt.

0023679

Die zur Regelung der Volumen- bzw. Massenströme dienenden Ventile können mit zeitlich linear veränderlichen Signalen angesteuert werden. Dies bedeutet, daß der Ventilhub innerhalb einer Phase mit fortlaufender Zeit mit konstanter Geschwindigkeit verändert wird. Es sollen dann solche Ventile verwendet werden, deren hubabhängige Öffnungscharakteristik an den zur Erzielung konstanter Restgasströme jeweils geforderten Verlauf des mit der Zeit veränderlichen Ventilöffnungsgrades angepaßt ist. Je nach den gegebenen Verhältnissen wird es nämlich im allgemeinen erforderlich sein, die Ventilöffnung auf eine spezifische, zeitlich nicht lineare Weise zu verändern. Bei linearer Ansteuerung des Ventils muß demnach ein speziell konstruiertes Ventil verwendet werden, bei dem die jeweils freigegebene Öffnung beispielsweise durch die Formgebung des Ventilkörpers bestimmt wird. Durch diese Formgebung ist die Öffnungscharakteristik des Ventils gegeben, die den funktionellen Zusammenhang zwischen dem Ventilhub und der Querschnittsfläche der für den Fluidstrom jeweils freigegebenen Öffnung wiedergibt. Diese Verfahrensweise hat den Vorteil, daß lineare Signalgeber verwendet werden können, was allerdings die Verwendung relativ komplizierter, speziell an das einzelne Verfahren konstruktiv angepaßter Ventile notwendig macht.

Im Gegensatz hierzu ist es auch möglich, zur Regelung der Volumen- bzw. Massenströme solche Ventile zu verwenden, deren hubabhängige Öffnungscharakteristik linear verläuft. Die geforderte zeitliche Veränderung des Ventilöffnungsgrades wird dabei durch ein entsprechend geformtes, nicht lineares Ansteuersignal bewirkt. Diese Verfahrensweise hat den Vorteil, daß konstruktiv einfach gestaltete Ventile verwendet werden können, wobei nunmehr allerdings bei der Erzeugung der Ansteuersignale ein vermehrter Aufwand getrieben werden muß.

Für die Erzeugung der Ansteuersignale stehen verschiedene Möglichkeiten zur Verfügung. Diese können beispielsweise durch einen Prozeßrechner oder einen pneumatisch oder hydraulisch arbeitenden Regler geliefert werden.

Zum Zwecke der besonders flexiblen Gestaltung des Verfahrens ist die Möglichkeit vorgesehen, die Dauer der Schaltzyklen in Abhängigkeit von der Durchsatzmenge des zu reinigenden bzw. zu zerlegenden Gasgemisches zu verändern. Dies kann beispielsweise dadurch geschehen, daß die Ansteuersignale der zur Regelung der Volumen- bzw. Massenströme dienenden regelbaren Ventile um einen entsprechenden, vom Mengendurchsatz abhängigen Faktor verlangsamt oder beschleunigt werden. Zu diesem Zwecke ist es erforderlich, etwaige Veränderungen der in die Adsorptionsanlage einzuspeisenden Rohgasmenge durch Messung zu erfassen. Die entsprechenden Meßwerte werden dem Regelgerät zugeführt, das daraufhin die notwendigen Verkürzungen oder Verlängerungen der Schaltzyklen veranlaßt, womit eine im allgemeinen proportional erfolgende Veränderung der einzelnen Phasen verbunden ist. Die Regelung kann so eingerichtet werden, daß eine Veränderung der Schaltzyklen nur dann vorgenommen wird, wenn eine längerfristige Änderung des Rohgasstromes festgestellt wird, was durch eine Mittelung der Meßwerte über mehrere Schaltzyklen erreicht werden kann.

Das Verfahren gemäß der Erfindung ist hinsichtlich seiner Anwendbarkeit äußerst vielseitig. Es unterliegt weder in der Auswahl des Adsorptionsmittels noch der zu behandelnden Gasgemische irgendwelchen prinzipiellen Einschränkungen, die über die Forderung hinausgehen, daß das Gasgemisch mindestens eine von dem Adsorptionsmittel bevorzugt adsorbierbare Komponente enthält. Das Wesen der Erfindung betrifft ersichtlich nicht solche Einzelheiten wie die Auswahl des Adsorptionsmittels, sondern liegt vielmehr ausschließlich in der Art und Weise der Verfahrensführung.

Im folgenden soll die Erfindung anhand zweier Ausführungsbeispiele und der dazugehörigen Abbildungen näher erläutert werden.

Es zeigen:

Figur 1    ein Verfahrensschema einer mit vier zyklisch umschaltbaren Adsorbern betriebenen Adsorptionsanlage,

Figur 2    ein Zeitablaufdiagramm zum Verfahren der Figur 1,

Figur 3    ein auf ein bekanntes, mit vier Adsorbern arbeitendes Verfahren bezogenes Diagramm, das den Volumenstrom des abgezogenen Restgases über der Zeit darstellt,

Figur 4    ein auf das Verfahren der Figur 1 bezogenes Diagramm des Restgas-Volumenstromes über der Zeit,

Figur 5    ein Verfahrensschema eines mit neun zyklisch umschaltbaren Adsorbern arbeitenden Verfahrens,

Figur 6    ein Zeitablaufdiagramm zum Verfahren der Figur 5,

Figur 7    ein auf ein bekanntes, mit neun Adsorbern arbeitendes Verfahren bezogenes Diagramm, das den Volumenstrom des abgezogenen Restgases über der Zeit darstellt,

Figur 8    ein auf das Verfahren der Figur 5 bezogenes Diagramm des Restgas-Volumenstromes über der Zeit.

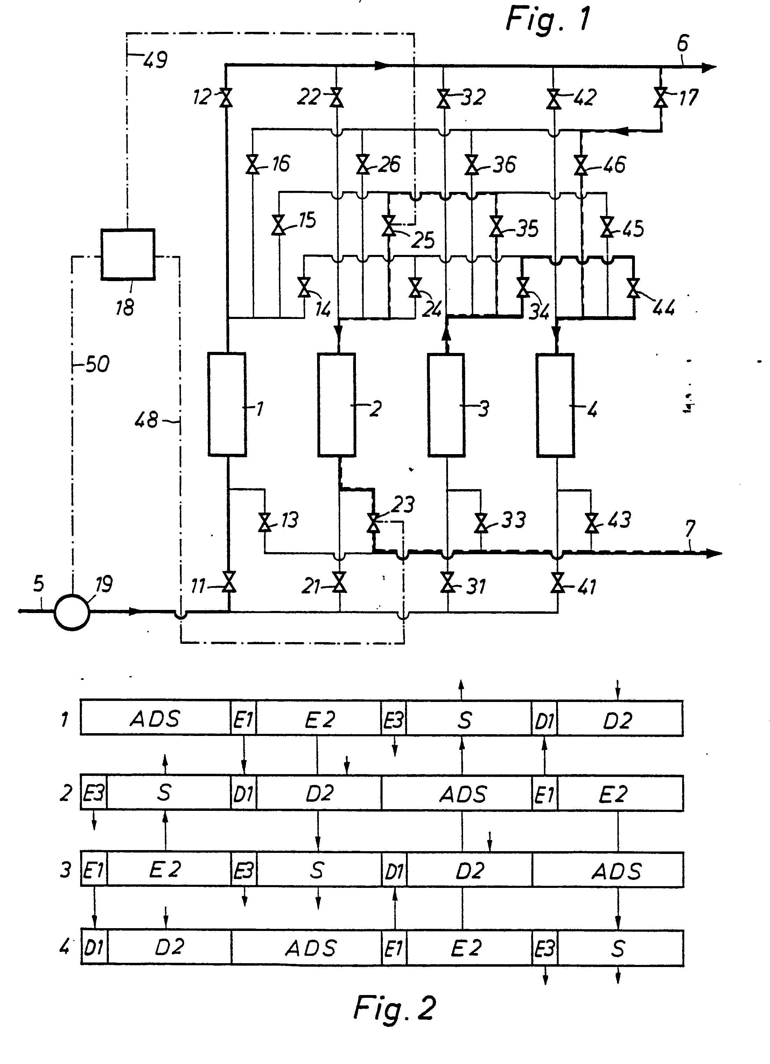

In der Figur 1 sind vier zyklisch umschaltbare, jeweils identische Schaltzyklen durchlaufende Adsorber 1 bis 4 dargestellt. Auf den Adsorptionsdruck verdichtetes, zum Zwecke der Reinigung oder Zerlegung zu behandelndes Rohgas wird über eine Leitung 5 heran-, die adsorbierten Komponenten nicht mehr enthaltendes Produktgas über eine Leitung 6 und an den adsorbierten Komponenten angereichertes Restgas über eine Leitung 7 abgeführt. Die Auslaßseiten der Adsorber 1 bis 4 sind über eine Druckausgleichsleitung 8, eine Spülgasleitung 9 sowie eine Druckgasleitung 10 miteinander verbindbar. Ventilpaare 11, 12 bis 41, 42 ermöglichen den Zu- und Abfluß des zu behandelnden Gasgemisches, d.h. des Rohgases, bzw. des nach Adsorption gewisser Komponenten von diesen befreiten Produktgases. Die Restgasleitung 7 ist über Ventile 13 bis 43 mit den Einlaßseiten der Adsorber 1 bis 4 verbunden. Zwischen der Druckausgleichsleitung 8 und den Auslaßseiten der Adsorber 1 bis 4 liegen Ventile 14 bis 44, Ventile 15 bis 45 verbinden die Spülgasleitung 9 und Ventile 16 bis 46 die Druckgasleitung 10 mit den Adsorber-Auslaßseiten. Die Druckgasleitung 10 ist weiterhin über ein Ventil 17 mit der Produktgasleitung 6 verbunden. Die Ventile 13, 23, 33, 43 sowie 15, 25, 35, 45 sind regelbare Ventile, die Ventile 14, 24, 34, 44 sowie 16, 26, 36, 46 können sowohl regelbare Ventile als auch Schaltventile sein, während die übrigen Ventile reine Schaltventile sind.

Dauer und Einteilung der Schaltzyklen sowie die über die Restgasleitung 7 abgezogenen Volumen- bzw. Massenströme des Restgases werden mit Hilfe einer Regelgerätes 18 eingeregelt. Dieses gibt die Schaltimpulse für sämtliche Schaltventile sowie die Ansteuersignale für die regelbaren Ventile 13 bis 43 sowie 15 bis 45. In der Figur dargestellt sind lediglich zwei Signalleitungen 48, 49, die Ansteuerimpulse für die regelbaren Ventile 23 und 25 liefern. Die übrigen Leitungen sind aus Gründen der Übersichtlichkeit nicht dargestellt. Wenn als regelbare Ventile 13 bis 43 und 15 bis 45 solche mit linearen Öffnungscharakteristiken eingesetzt werden, dann müssen in das Regelgerät Informationen über das zeitliche Profil der Ansteuersignale eingegeben werden. Dieses ist dann zweckmäßig ein programmierbarer Prozeßrechner. Ihm werden über eine Meßleitung 50 von einem Durchsatzmengenmesser 19 ermittelte Meßwerte zugeführt. Der Prozeßrechner erzeugt durch Mittelung über mehrere Schaltzyklen einen von der Durchsatzmenge des Rohgases abhängigen Faktor, der die Ansteuersignale verlangsamt oder beschleunigt. Die Intervalle zwischen den den Schaltventilen zuzuführenden Schaltimpulsen werden in entsprechender Weise beeinflußt.

In Figur 2 ist das zum Verfahren der Figur 1 gehörende Zeitablaufdiagramm dargestellt. Jedem der vier Adsorber 1 bis 4 ist einer der waagerecht angeordneten Balken zugeordnet. Ein Schaltzyklus besteht aus einer Adsorptionsphase ADS, drei Entspannungsphasen E1 bis E3, einer Spülphase S sowie zwei Druckaufbauphasen D1 und D2. Die vier Adsorber 1 bis 4 durchlaufen diese Schaltzyklen in identischer Weise mit einer zeitlichen Versetzung, die einem Viertel der Dauer eines Schaltzyklus entspricht. In der Figur 1 ist mit Hilfe fett durchgezogener bzw. gestrichelter Linien die Strömungsführung während des ersten Viertels eines Schaltzyklus dargestellt, entsprechend den jeweils links angeordneten Vierteln der Balken in Figur 2. Dieses Viertel ist bereits repräsentativ für den gesamten Schaltzyklus. Die fett durchgezogenen Linien gelten für die Adsorptionsphase ADS, die erste und dritte Entspannungsphase E1 bzw. E3 sowie die erste Druckaufbauphase D1, während durch die gestrichelten Linien die zweite Entspannungsbzw. Spülphase E2/S sowie die zweite Druckaufbauphase D2 dargestellt werden.

Gleichzeitig mit der Adsorptionsphase ADS des Adsorbers 1, die bei geöffneten Ventilen 11 und 12 stattfindet, wird der Adsorber 3 zunächst seiner ersten Entspannungsphase E1

unterzogen, während der von der Auslaßseite her vorwiegend im Lückenvolumen der Adsorptionsmittelschüttung verbliebenes Gas über die geöffneten Ventile 34 und 44 in den Adsorber 4 einströmt, der sich gleichzeitig in seiner ersten Druckaufbauphase D1 befindet. Dieser Druckausgleich erfolgt in einer im Vergleich zur Dauer der Adsorptionsphase relativ kurzer Zeit. Der Druckausgleich findet sein Ende bei Erreichen eines ersten Zwischendruckes. Währenddessen wird der Adsorber 2, der sich in seiner dritten und letzten Entspannungsphase E 3 befindet, von seiner Einlaßseite her über das geöffnete regelbare Ventil 23 auf den niedrigsten Verfahrensdruck abgelassen. Das dabei abströmende, bereits an zuvor adsorbierten Komponenten angereicherte Gas wird über die Restgasleitung 7 abgezogen. Das über die Signalleitung 48 vom Prozeßrechner 18 her angesteuerte Regelventil 23 öffnet seinen Durchflußquerschnitt dabei in vorher festgelegter Weise, infolge eines entsprechenden Anstiegsprofils des Ansteuersignales.

Nach Abschluß der drei gleichzeitig ablaufenden Phasen E1, D1 und E3 verbleibt der Adsorber 1 noch in der Phase ADS, während der Adsorber 2 in die Spülphase S, der Adsorber 3 in die zweite Entspannungsphase E2 und der Adsorber 4 in die zweite Druckaufbauphase D2 eintritt. Nunmehr stehen über geöffnete Ventile 35 und 25 sowie die Spülgasleitung 9 die Auslaßseiten der Adsorber 3 und 2 miteinander in Verbindung. Der anfänglich auf dem ersten Zwischendruck befindliche Adsorber 3 wird dabei auf einen zweiten Zwischendruck entlastet. Das aus ihm abströmende Gasgemisch enthält bereits zunehmend die vorher adsorbierten Komponenten. Dieses durchströmt den Adsorber 2 im Gegenstrom (bezüglich der während der Adsorptionsphase herrschenden Strömungsrichtung), nimmt die aus der Adsorptionsmittelschüttung dieses Adsorbers desorbierenden Komponenten auf und wird über das weiterhin geöffnete regelbare Ventil 23 in die Restgasleitung 7 abgeleitet. Während der gesamten Spülphase S herrscht zwischen dem Adsorber 3 und dem Adsorber 2 noch eine allerdings abnehmende positive Druckdifferenz, da sich der Adsorber 2 zu Beginn der Spülphase nach dem Durchlaufen der dritten Entspannungsphase E3 bereits auf dem niedrigsten Verfahrensdruck befindet. Die Regelung der dem Adsorber 2 über die Spülgasleitung 9 zu strömenden Spülgasmenge übernimmt das Regelventil 25, das über die Signalleitung 49 vom Prozeßrechner 18 her mit einem vorher festgelegten, nicht linearen Signal angesteuert wird. Die Ventile 35 und 23 bleiben während dieser Spül- bzw. zweiten Entspannungsphase unverändert weit geöffnet. Gleichzeitig wird der Adsorber 4 über die geöffneten Ventile 17 und 46 sowie den entsprechenden Abschnitt der Druckgasleitung 10 mit gereinigtem Produktgas von dem genannten ersten Zwischendruck auf den Adsorptionsdruck gebracht.

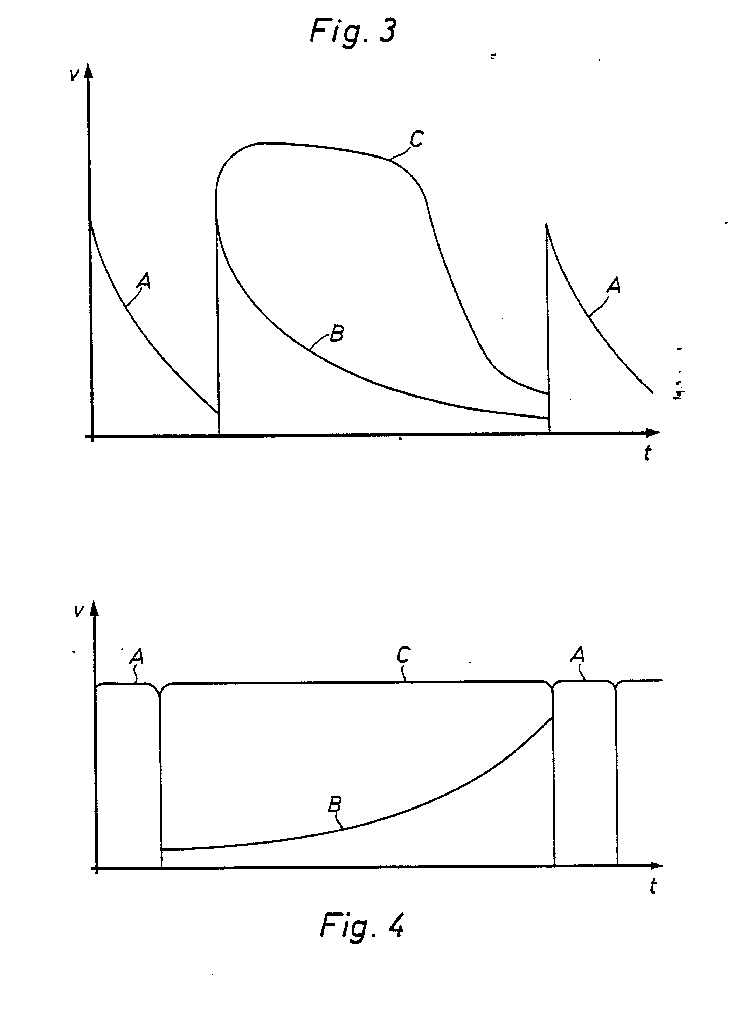

Die Figur 3 ist auf das eingangs genannte, bekannte, mit vier Adsorbern arbeitende Verfahren bezogen. Zum Verständnis kann auch das Zeitablaufdiagramm der Figur 2 herangezogen werden. In Figur 3 ist auf der Ordinate der Volumenstrom, auf der Abszisse die Zeit aufgetragen. Die Kurven A und C entsprechen den während der dritten Entspannungsphasen E3 bzw. der Spülphasen S abfließenden Restgasströmen. Die Kurve B gibt den Verlauf des zum Spülen in den jeweiligen Adsorber eingeleiteten Spülgasstromes wieder, der aus einer zweiten Entspannungsphase E2 stammt. Die Differenz zwischen den Kurven C und B entspricht dem Anteil der desorbierten Komponenten in dem während der Spülphase S abströmenden Restgas. Aus den Kurven geht deutlich hervor, daß ohne Anwendung der erfindungsgemäßen Maßnahmen ein stark schwankender Restgasstrom anfällt.

In Figur 4 ist dem gegenüber dargestellt, wie sich die Anwendung der erfindungsgemäßen Maßnahmen auswirkt. Die auf Ordinate und Abszisse aufgetragenen Veränderlichen sowie die Kurvenbezeichnungen sind dieselben wie in Figur 3. Der Figur 4 ist zu entnehmen, daß bei Anwendung der erfindungsgemäßen Regelmaßnahmen ein nahezu konstanter Restgas-Volumenstrom resultiert. Weiterhin wird eine Verkürzung der dritten Entspannungsphasen E3 (Kuve A) erforderlich, und der durch die Regelung zu erzwingende Verlauf des Spülgasstromes B weicht erheblich von dem der Figur 3 ab.

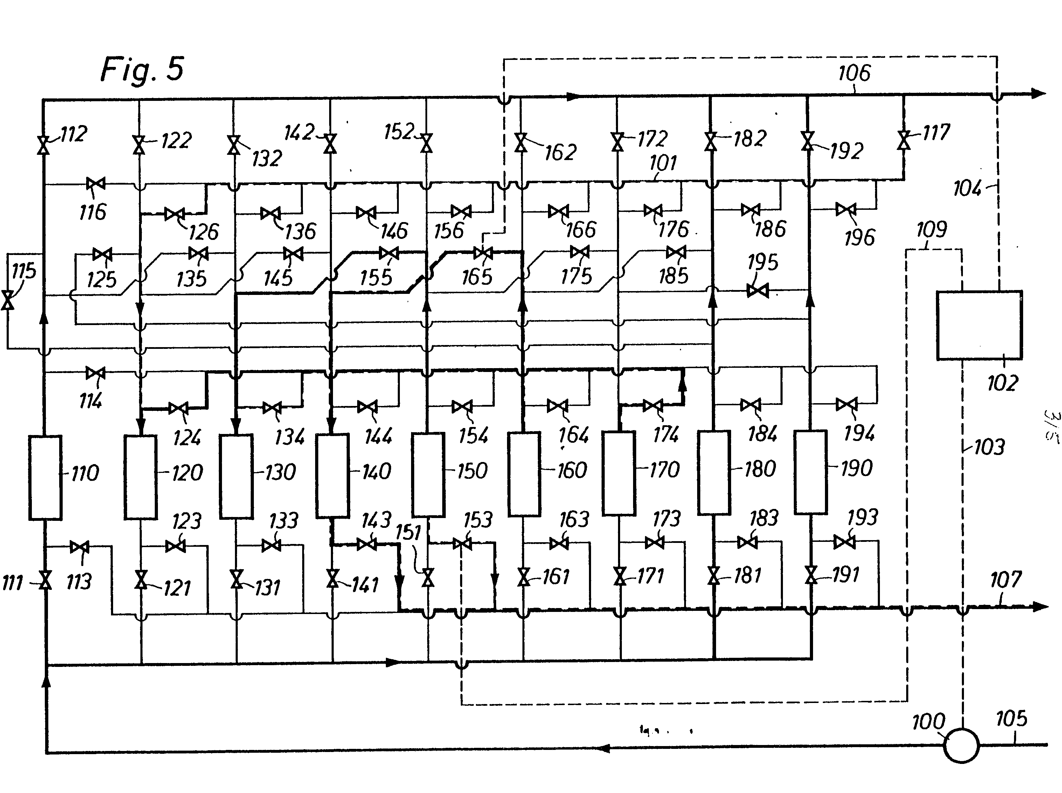

Figur 5 zeigt das Verfahrensschema eines mit neun zyklisch umschaltbaren Adsorbern arbeitenden Verfahrens, wie es aus der DE-OS 26 24 346 vorbekannt ist, und bei dem die erfindungsgemäßen Maßnahmen zum Einsatz kommen. Es sind neun gleichberechtigte, mit einer zeitlichen Versetzung von einem Neuntel der Zyklusdauer jeweils identische Schaltzyklen durchlaufende Adsorber 110 bis 190 dargestellt. Durch eine Rohgasleitung 105 wird das zu reinigende bzw. zu zerlegende Gasgemisch eingeführt, durch eine Produktgasleitung 106 das von den adsorbierten Komponenten befreite Produktgas und über eine Restgasleitung 107 das mit den zuvor adsorbierten Komponenten angereicherte Restgas abgeführt. Weiterhin ist eine Druckgasleitung 101 vorgesehen, die einerseits über ein Ventil 117 mit der Produktgasleitung 106 und andererseits über Ventile 116 bis 196 mit den Auslaßseiten der Adsorber 110 bis 190 verbindbar ist. Die Auslaßseiten der Adsorber können außerdem über eine Druckausgleichsleitung 108 und Ventile 114 bis 194 miteinander verbunden werden. Die Restgasleitung 107 ist über Ventile 113 bis 193 von den Einlaßseiten der Adsorber absperrbar bzw. mit diesen verbindbar. Das Zuströmen des Rohgases bzw. das Abströmen des Produktgases geschieht über zu diesem Zweck jeweils geöffnete Ventile 111 bis 191 bzw. 112 bis 192. Weiterhin sind Spülgasventile 115 bis 195 vorgesehen, über die die Auslaßseite

0023679

eines jeden Adsorbers mit der Auslaßseite des jeweils übernächsten Adsorbers verbindbar ist.

Eine Regelvorrichtung 102, vorzugsweise ein programmierbarer
Prozeßrechner, übernimmt die Steuerung der gesamten Anlage.
Die Überwachung des Rohgasstromes mit Hilfe eines Durchsatzmengenmessers 100, der über eine Meßleitung 103 mit dem Regelgerät 102 verbunden ist, sowie die Verwertung der Meßsignale erfolgt wie oben bereits im Zusammenhang mit Figur 1
geschildert. Das Regelgerät sorgt für die Regelung der die
Spülgasventile 115 bis 195 bzw. die zur Restgasleitung 107
führenden Ventile 113 bis 193 durchströmenden Massen- bzw.
Volumenströme. Die den beiden genannten Gruppen angehörenden Ventile sind regelbare Ventile, vorzugsweise mit linearer
Öffnungscharakteristik, die im letzteren Falle mit vorher
festgelegten, nicht linearen Signalen angesteuert werden.
Diese Ansteuerung erfolgt über besondere Signalleitungen,
von denen aus Gründen der Übersichtlichkeit in der Figur
nur die beiden Leitungen 104 und 109 dargestellt sind.

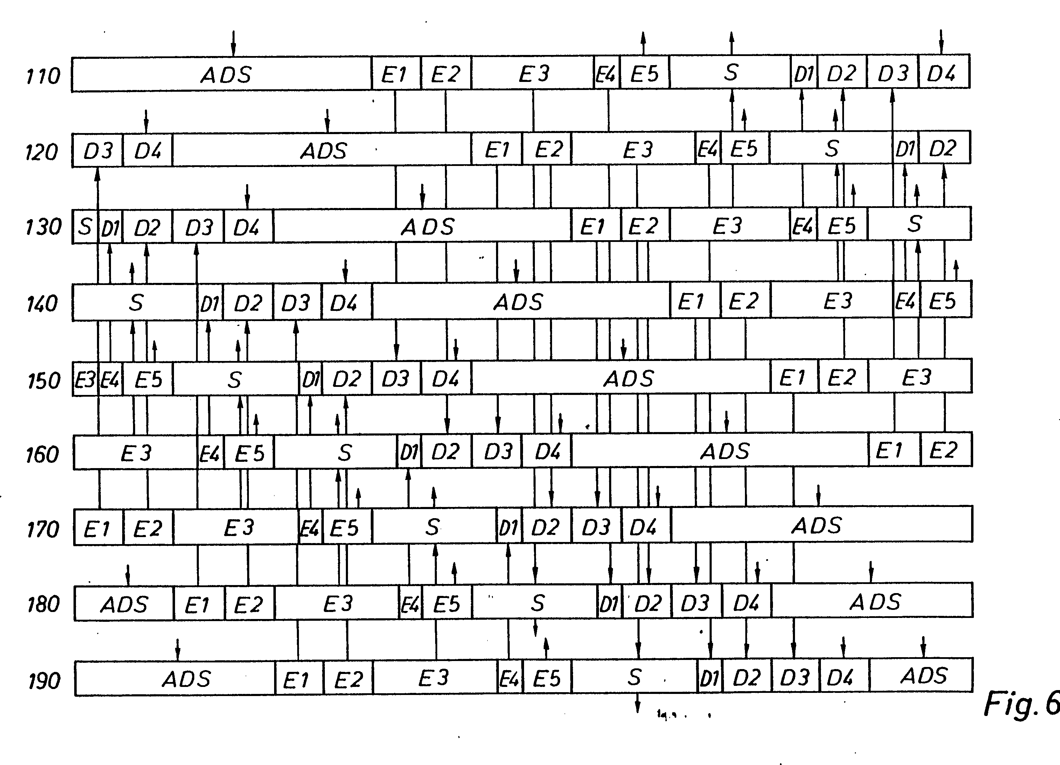

Figur 6 zeigt das zu Figur 5 gehörenden Zeitablaufdiagramm.
Die neun waagerechten Balken sind den Adsorbern 110 bis 190
zugeordnet. Ein Schaltzyklus besteht aus einer Adsorptionsphase
ADS; einer im Druckausgleich mit einer dritten Druckaufbauphase D3 betriebenen ersten Entspannungsphase E1, einer im
Druckausgleich mit einer zweiten Druckaufbauphase D2 betriebenen zweiten Entspannungsphase E2, einer Spülgas für
eine Spülphase S liefernden dritten Entspannungsphase E3,
einer im Druckausgleich mit einer ersten Druckausgleichsphase D1 betriebenen vierten Entspannungsphase E4, einer
lediglich Restgas liefernden fünften Entspannungsphase E5,
einer Spülphase S, drei im Druckausgleich mit Entspannungsphasen betriebenen Druckaufbauphasen D1 bis D3 sowie einer
vierten und letzten, mit Produktgas betriebenen Druckaufbauphase D4.

Form. 5729 7.78

In der Figur 5 sind als dick ausgezogene oder gestrichelte Linien die Phasen dargestellt, die gleichzeitig mit der ersten sowie der zweiten Druckaufbauphase D1 bzw. D2 des Adsorbers 130 ablaufen (siehe hierzu Figur 6). Während dieses Zeitraumes befinden sich die Adsorber 110, 180 und 190 in der Adsorptionsphase ADS (in Figur 5 mit Hilfe dick ausgezogener Linien dargestellt). Zunächst laufen, ebenfalls durch dick ausgezogene Linien dargestellt, gleichzeitig folgende Phasen ab: Die Adsorber 120 und 170 stehen über ihre Auslaßseiten und die geöffneten Ventile 124 und 174 sowie die Druckausgleichsleitung 108 miteinander im Druckausgleich, wobei der Adsorber 170 auf einen ersten Zwischendruck entlastet wird. Die dabei abströmende Gasfraktion besteht im wesentlichen aus dem nach Abschluß der Adsorptionsphase im Lückenvolumen der Adsorptionsmittelschüttung verbliebenen Gas, das weitgehend die Produktgaszusammensetzung aufweist. Gleichzeitig findet zwischen den Adsorbern 130 und 150 ebenfalls ein Druckausgleich statt, und zwar über das geöffnete, die Auslaßseiten der beiden Adsorber miteinander verbindende Spülgasventil 155. Die Öffnung dieses Spülgasventiles wird während des Druckausgleichs nicht geregelt, sondern verbleibt auf einem konstanten Wert. Dieser Druckausgleich entspricht der vierten Entspannungsphase E4 des Adsorbers 150, der dabei auf einen vierten, bereits relativ niedrigen Zwischendruck entlastet wird, wobei ein schon die desorbierenden Komponenten enthaltendes Gasgemisch abströmt. Der Adsorber 160 befindet sich währenddessen in seiner dritten Entspannungsphase E3, die unter Entlastung auf einen dritten Zwischendruck Spülgas für den Adsorber 140 liefert, das über das geregelte Ventil 165 in dessen Auslaßseite einströmt, die dort desorbierenden Komponenten aufnimmt und über das geöffnete Ventil 143 durch Restgasleitung 107 abströmt. Während dieses Spülvorganges herrscht zwischen den Adsorbern 160 und 140 stets eine, wenn auch abnehmende positive Druckdifferenz, da der zu spülende Adsorber 140 sich auf dem niedrigsten im Verfahren auftretenden Druck befindet, während der Adsorber 160 noch zwei

0023679

weitere Entspannungsstufen zu durchlaufen hat, bevor auch er gespült wird. Nach Abschluß der ersten Entspannungsphase E1 des Adsorbers 170 werden dieser sowie die Adsorber 150, 130 und 120 umgeschaltet.

Die nunmehr gleichzeitig ablaufenden Phasen der Adsorber 120 bis 170 sind in Figur 5 durch gestrichelte Linien dargestellt, während die weiterhin ablaufenden Adsorptionsphasen der Adsorber 110, 180 und 190 unverändert durch die dick ausgezogenen Linien repräsentiert sind. Der Adsorber 170 tritt nun in seine zweite Entspannungsphase E2 ein, die über die geöffneten Ventile 134 und 174 im Druckausgleich mit dem Adsorber 130 betrieben wird, der sich in seiner zweiten Druckaufbauphase D2 befindet. Das dabei bis zum Erreichen eines zweiten Zwischendruckes aus dem Adsorber 170 abströmende Gasgemisch hat auch jetzt noch im wesentlichen die Zusammensetzung des Produktgases. Die Spülung des Adsorbers 140 mit Hilfe von aus dem Adsorber 160 abströmendem Entspannungsgas wird, wie weiter oben bereits beschrieben, fortgesetzt. Der Adsorber 150 durchläuft gleichzeitig eine fünfte Entspannungsphase E5, während der er mit seiner Einlaßseite über das geöffnete Ventil 153 mit der Restgasleitung 107 verbunden ist. Durch Regelung dieses Ventils 153 wird das Abströmen des nunmehr bereits stark mit desorbierten Komponenten angereicherten letzten Entspannungsgases auf die vorher festgelegte Weise erzwungen. Der Adsorber 120 schließlich wird der vierten Druckaufbauphase D4 unterzogen, wobei seine Auslaßseite über das geöffnete Ventil 126 mit der Druckgasleitung 101 verbunden ist, aus welcher gereinigtes Produktgas, über das geöffnete Ventil 117 von der Produktgasleitung 106 abgezweigt, in ihn einströmt. Während dieser letzten Druckaufbauphase D4 wird der Adsorber 120 wieder auf den Adsorptionsdruck gebracht.

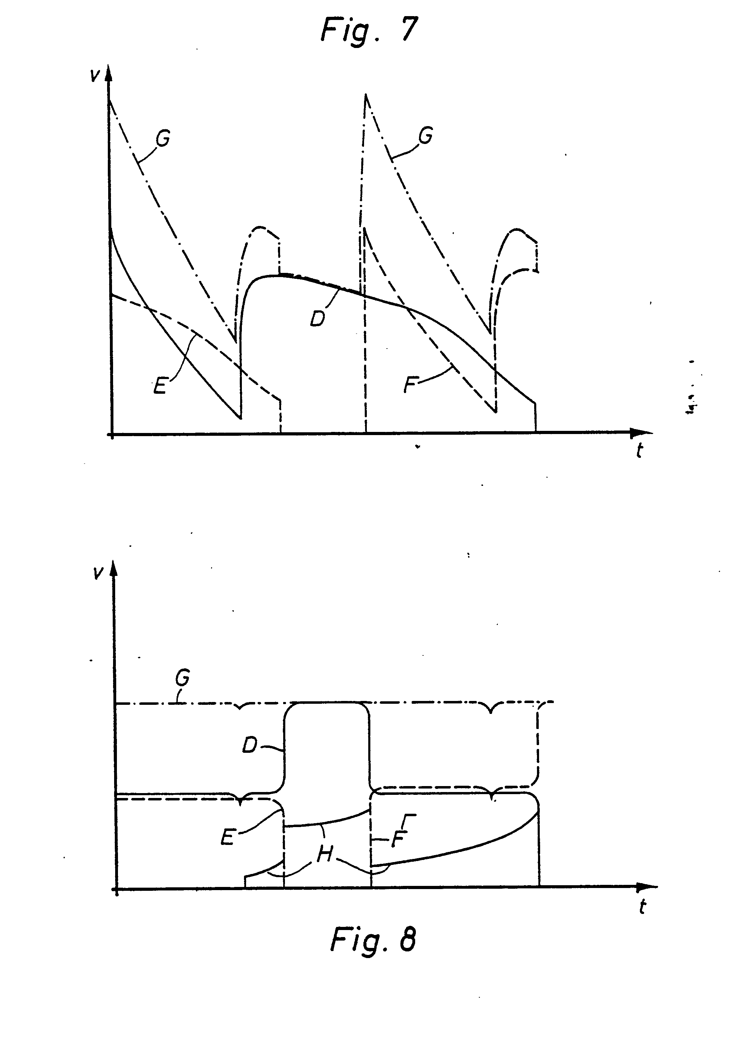

Die Figuren 7 und 8 beziehen sich auf das in den Figuren 5 und 6 dargestellte Verfahren, wobei das Diagramm der Figur 7

Form. 5729 7.78

ohne, das Diagramm der Figur 8 dagegen mit Anwendung der erfindungsgemäßen Maßnahmen erhalten wird. Dargestellt sind die Restgas-Volumenströme V über der Zeit t. Die Kurve D beziehe sich beispielsweise auf den Adsorber 110 und stellt den Strömungsverlauf während der fünften Entspannungsphase E5 und der anschließenden Spülphase S dar. Die Kurve E repräsentiert dann die Spülphase des Adsorbers 190, die etwas länger dauert als die fünfte Entspannungsphase des Adsorbers 110. Die Kurve F bezieht sich auf den Adsorber 120, der in die Spülphase E5 eintritt, noch während sich der Adsorber 110 in seiner Spülphase S befindet. Die Kurve G zeigt den insgesamt abgezogenen Restgasstrom, der die Summe der während der fünften Entspannungsphase E5 sowie der Spülphase S abströmenden Volumina darstellt. Ohne Einsatz der erfindungsgemäßen Regelmaßnahmen weist der Restgasstrom, wie aus Figur 7 zu entnehmen ist, erhebliche zeitliche Schwankungen auf. Diese können bei Anwendung der Erfindung nahezu vollständig unterdrückt werden, wie aus Figur 8 hervorgeht. Der Spülgasstrom ist dann jeweils so zu regeln, wie die Kurven H angeben, die hier nur bezüglich der Kurve D dargestellt sind. Die Differenzen zwischen der Kurve D und den Kurven H entsprechen den während der Spülphase abgezogenen desorbierten Komponenten.

## Patentansprüche

1. Verfahren zur adsorptiven Reinigung oder Zerlegung von Gasgemischen unter Verwendung mehrerer zyklisch umschaltbarer Adsorber, die mit zeitlicher Versetzung jeweils gleiche, Adsorptions-, Entspannungs-, Spül- sowie Druckaufbauphasen enthaltende Schaltzyklen durchlaufen, wobei während jeweils mindestens einer Entspannungsphase sowie während der Spülphasen mit der oder den adsorbierten Gaskomponenten angereicherte Gasfraktionen anfallen, die insgesamt als Restgas abgezogen werden, dadurch gekennzeichnet, daß durch Regelung der Volumen- oder Massenströme der während der Entspannungsphasen anfallenden, als Restgas abgezogenen Gasfraktionen sowie der während der Spülphasen zugeführten Spülgase als Restgas ein zeitlich im wesentlichen konstanter Volumen- bzw. Massenstrom abgezogen wird.

2. Verfahren nach Anspruch 1, dadurch gekennzeichnet, daß als Spülgas jeweils während einer oder mehrerer Entspannungsphasen abströmende Gasfraktionen verwendet werden.

Form. 5729 7.78

3. Verfahren nach Anspruch 1 oder 2, dadurch gekennzeichnet, daß Restgas jeweils nur aus einem einzigen Adsorber abgezogen wird und das Restgas insgesamt aus nacheinander anfallenden, abwechselnd aus Entspannungs- und Spülphasen stammenden Gasfraktionen besteht, wobei die Volumen- bzw. Massenströme dieser Gasfraktionen zeitlich im wesentlichen konstant gehalten werden.

4. Verfahren nach Anspruch 1 oder 2, dadurch gekennzeichnet, daß zumindest während eines Teilabschnittes eines jeden Schaltzyklus Restgas aus mindestens zwei Adsorbern gleichzeitig abgezogen und die Summe der Volumen- bzw. Massenströme der gleichzeitig anfallenden, als Restgasanteile abgezogenen Gasfraktionen dauern auf einem zeitlich im wesentlichen konstanten Wert gehalten wird.

5. Verfahren nach einem der Ansprüche 1 bis 4, dadurch gekennzeichnet, daß die Längen der Restgas bzw. Restgasanteile liefernden Spül- und Entspannungsphasen in demselben Verhältnis zueinander stehen wie die während der entsprechenden Phasen anfallenden Gesamtvolumina bzw. -massen der Gasfraktionen.

6. Verfahren nach einem der Ansprüche 1 bis 5, dadurch gekennzeichnet, daß die Regelung der Volumen- bzw. Massenströme mittels regelbarer Ventile erfolgt, deren Durchlaßquerschnitte während der einzelnen Regelabschnitte mit der Zeit vergrößert werden.

7. Verfahren nach einem der Ansprüche 1 bis 6, dadurch gekennzeichnet, daß die zur Regelung der Volumen- bzw. Massenströme dienenden Ventile mit zeitlich linear veränderlichen Signalen angesteuert und solche

Form. 5729 7.78

Ventile verwendet werden, deren hubabhängige Öffnungscharakteristik an den zur Erzielung konstanter Restgasströme jeweils geforderten Verlauf des mit der
Zeit veränderlichen Ventilöffnungsgrades angepaßt ist.

8. Verfahren nach einem der Ansprüche 1 bis 6, dadurch
gekennzeichnet, daß zur Regelung der Volumen- bzw.
Massenströme solche Ventile verwendet werden, deren
hubabhängige Öffnungscharakteristik linear verläuft,
wobei die geforderte zeitliche Veränderung des Ventilöffnungsgrades durch ein entsprechend geformtes, nicht
lineares Ansteuersignal bewirkt wird.

9. Verfahren nach Anspruch 7 oder 8, dadurch gekennzeichnet, daß das Ansteuersignal durch einen Prozeßrechner
oder einen pneumatisch oder hydraulisch arbeitenden
Regler geliefert wird.

10. Verfahren nach einem der vorgehenden Ansprüche, dadurch
gekennzeichnet, daß die Dauer der Schaltzyklen in Abhängigkeit von der Durchsatzmenge des zu reinigenden
bzw. zu zerlegenden Gasgemisches verändert und die Ansteuersignale der zur Regelung der Volumen- bzw. Massenströme dienenden regelbaren Ventile um einen entsprechenden, vom Mengendurchsatz abhängigen Faktor verlangsamt oder beschleunigt werden.

1/5

Fig. 1

Fig. 2

## Fig. 3

## Fig. 4

Fig. 5

Fig.6

5/5   0023679

Fig. 7

Fig. 8

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 153 808 (UNION CARBIDE CORP.) <br> * Seiten 3 bis 6 * <br> -- | 1 |
| | DE - A1 - 2 460 513 (LINDE) <br> * Anspruch 2 * <br> -- | 2 |
| | DE - A1 - 2 823 119 (UNION CARBIDE CORP.) <br> * Ansprüche 1, 2 * <br> -- | 1 |
| P | DE - A1 - 2 840 126 (BASF) <br> * Anspruch 1 * <br> ---- | 1 |

**KLASSIFIKATION DER ANMELDUNG (Int.Cl.3)**

B 01 D 53/02

**RECHERCHIERTE SACHGEBIETE (Int. Cl.3)**

B 01 D 53/02

B 01 D 53/04

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 31-10-1980 | KÜHN |

EPA form 1503.1  06.78